# FASCICULE DE BREVET EUROPEEN

(11) **EP 1 527 412 B1**
(45) Date de publication et mention de la délivrance du brevet: **01.10.2008**
(21) Numéro de dépôt: 03750842.1
(22) Date de dépôt: 25.07.2003
(51) Int. Cl.: G06K 19/073, G07D 7/00

(54) **DOCUMENT DE SECURITE COMPORTANT UN MICROCIRCUIT INTEGRE LIE A UN MICROCIRCUIT DE MESURE**
SICHERHEITSDOKUMENT MIT EINEM MIT EINER SCHALTUNG ZUR MESSUNG VERBUNDENEN INTEGRIERTEN SCHALTKREIS
SECURITY DOCUMENT COMPRISING AN INTEGRATED MICROCIRCUIT CONNECTED TO A MEASURING MICROCIRCUIT

(30) Priorité: 26.07.2002 FR 0209481
(43) Date de publication de la demande: 04.05.2005
(73) Titulaire: Arjo Wiggins Security SAS, 92130 Issy les Moulineaux (FR)
(72) Inventeur: RANCIEN, Sandrine, F-38140 La Murette (FR)
(74) Mandataire: Tanty, François
(86) Numéro de dépôt international: PCT/FR2003/002347
(87) Numéro de publication internationale: WO 2004/012228

(56) Documents cités:
- EP-A- 1 139 302

## Description

L'invention concerne un document de sécurité comportant un dispositif à microcircuit intégré lié à un microcircuit de mesure d'au moins une caractéristique particulière dudit document. Elle concerne aussi le procédé de reconnaissance du document.

Pour lutter contre la contrefaçon des documents de sécurité comme les moyens de paiement, les documents d'identité, on a introduit dans et/ou sur ces documents, des éléments de sécurité, maintenant bien connues, donnant des caractéristiques d'authentification au document. Ces caractéristiques sont souvent liées à des propriétés physiques, chimiques ou biologiques particulières, révélables par un système de détection adéquat. Ces éléments de sécurité sont par exemple des pigments, des fibres, des planchettes, des fils de sécurité, des foils ou patchs appliqués par transfert, des impressions ou vernis de surface, des films apposables sur le document, qui comportent, intrinsèquement ou via des matériaux introduits dans et/ou sur ces éléments, des propriétés particulières telle que des propriétés magnétiques, électriques, d'absorption des ondes électromagnétiques, de luminescence (fluorescence, phosphorescence dans l'UV, visible, InfraRouge, proche IR) ou encore des propriétés de résonance dans les micro-ondes ou les radio-fréquences, ou des propriétés biologiques notamment basées sur de l'ADN ou des propriétés provenant de produits chimiques ou réaction chimiques.

On a décrit aussi l'incorporation de dispositifs à microcircuits intégrés, dits puces, dans ou sur certains documents de sécurité comme moyen d'authentification (vérification de l'authenticité du document par rapport à une contrefaçon), d'identification (vérification de l'appartenance du document de sécurité à la personne qui le présente), de mise en évidence de falsification des données imprimées sur les documents en question.

Ces dispositifs à microcircuit intégré (dits puces) comportent une base semiconductrice, en général une galette de silicium dopée ou parfois faite d'un polymère semiconducteur ; ils comportent aussi en général une mémoire voire des microprocesseurs qui permettent de traiter des données. Pour fonctionner, ils ont besoin d'être alimentés par une source d'énergie électrique qui est apportée par contact et/ou sans contact, c'est-à-dire dans ce dernier cas, à distance par l'intermédiaire d'une interface de communication via une antenne, la puce étant disposée au centre de l'antenne pour une alimentation sans contact de type inductif ou selon une construction formant un condensateur, une antenne pouvant aussi faire partie de cette construction, pour une alimentation sans contact de type capacitif. Dans le cas du type inductif, le lecteur de la puce envoie des ondes captées par l'interface à antenne qui induit alors un courant électrique qui alimente et active le circuit de la puce. Les dispositifs avec antenne sont appelés transpondeurs ; ils utilisent en général les ondes radio-fréquences, d'où leur qualification de dispositifs d'identification radio-fréquence, désignés souvent par leur abréviation en anglais de dispositifs « RFID » (Radio-Frequence Identification Device). Ces ondes par le biais de modulation de fréquences permettent aussi un dialogue entre la puce et le lecteur. On entend par lecteur, tout dispositif qui permet de communiquer avec la puce, de la détecter, de lire les données de la puce, de recevoir ses données et le cas échéant de les modifier.

Dans la puce, sont par exemple contenues des données relatives au porteur dudit document de sécurité et à la durée de validité du document.

Pour l'authentification des documents de sécurité contenant des dispositifs à microcircuit intégré, on établit généralement une reconnaissance préalable mutuelle, de préférence sous forme cryptographique, entre le lecteur de la puce et la puce elle-même par exemple d'après le numéro de la puce, ceci avant le démarrage des échanges de données entre le lecteur et la puce.
Par exemple, comme décrit dans le brevet WO 01/20564, on introduit dans la mémoire de la puce, le numéro du document de sécurité (par exemple d'un passeport ou d'une carte d'identité) et on fait ainsi un lien entre ce numéro propre à chaque document et celui propre à la puce qui est gravé sur la base silicium de la puce. On peut alors, lors du processus d'authentification, lire les données de la mémoire de la puce et vérifier que ces deux numéros et/ou l'une de leurs combinaisons sont conformes à ceux attendus par le lecteur qui comporte par ailleurs aussi ces données dans sa mémoire.

Dans le brevet US 4783823 de la société OMRON TATEISI Electronics, on a décrit un système pour identifier si une carte en plastique du type carte bancaire normalisée ISO avec une piste magnétique est bien authentique ou non. Le processus d'authentification des cartes reposait à l'origine uniquement sur une comparaison entre le code numéroté émis par le porteur de la carte et celui inscrit sur la piste magnétique, mais il est très facile de contrefaire ces cartes à piste magnétique. Dans ce brevet on propose d'améliorer l'authentification en utilisant un appareil que l'on introduit par exemple dans les distributeurs d'argent. La carte contient des informations enregistrées préalablement concernant des caractéristiques de surface de la carte telles qu'un dessin réalisé par embossage sur la dite carte, des caractères imprimés sur ladite carte ou encore une couleur. Lors du processus d'authentification, l'appareil, par des moyens non décrits dans le brevet, mesure les caractéristiques de surface et compare ensuite les données mesurées avec celles préenregistrées afin de déterminer si la carte est authentique ou non.
Les inconvénients de ce document et du moyen d'authentification sont sa limitation à une caractéristique d'aspect de surface, la nécessité d'un dispositif externe pour authentifier optiquement la marque, ainsi qu'une instabilité du système dans le temps ou lors de la circulation du document, car la marque, du fait qu'elle soit un aspect de surface, va s'abîmer, et sa mesure ne correspondra plus à celle en mémoire de la puce. De plus, il n'est pas envisagé dans ce brevet que la carte elle-même puisse être capable, après lui en avoir donné l'ordre à distance, de s'auto-contrôler avant d'échanger d'autres informations avec l'extérieur.

Dans la demande de brevet DE19833746, on a décrit un papier de sécurité qui comporte un dispositif à microcircuit intégré (puce) sans contact et une marque d'authenticité de surface reconnaissable par un dispositif optique externe. La marque est entrée sous forme d'un code dans la mémoire de la puce et constitue les informations du signal de sortie envoyé par la puce à un lecteur. L'authentification du document est vérifiée par un appareil de contrôle externe qui lit d'une part les informations de la marque lisible sur le document par des moyens optiques et d'autre part reçoit et lit les informations du signal de sortie de la puce relatives à cette marque, signal émis en réponse au signal d'entrée envoyé par ce même appareil; l'appareil agrée l'authenticité du document en comparant ces deux sources d'information qui doivent concorder.
Comme précédemment, les inconvénients de ce document et de son moyen d'authentification sont sa limitation à une caractéristique optique d'aspect de surface, la nécessité d'un dispositif externe pour authentifier optiquement la marque, ainsi qu'une instabilité du système dans le temps ou lors de la circulation du document, car la marque en surface s'altère et sa mesure ne correspondra plus à celle en mémoire de la puce. EP 113902 décrit un autre document de sécurité.

Il s'avère donc nécessaire de résoudre les inconvénients cités et d'accroître la sécurité des documents ainsi que celle de leur méthode d'authentification.

Pour répondre aux problèmes ci-dessus, la Demanderesse propose de vérifier des caractéristiques particulières dudit document afin de réduire l'évolution des caractéristiques d'authentification dans le temps et de relier au microcircuit intégré, un microcircuit de mesure de ces caractéristiques. On utilise cette détermination de la caractéristique pour authentifier simplement le document ou encore pour valider le début de la procédure d'authentification avant l'échange de données informatives, telles que les données relatives au détenteur du document ou relatives au produit, entre la puce et son lecteur externe.

Dans le cadre de l'invention, on propose que le document de sécurité contenant un ou plusieurs dispositifs à microcircuit intégré, via l'utilisation de microcircuit de mesure, détermine lui-même, lorsqu'on lui demande, les caractéristiques de sécurité internes afin de valider son authenticité avant ou lors des échanges de données informatives entre le dispositif à microcircuit et le lecteur externe.
On entend par microcircuit de mesure, un circuit qui permet de déterminer ladite caractéristique par un signal électrique qui indique la simple détection de la présence de ladite caractéristique ou en donne une mesure chiffrée.

L'invention fournit ainsi un document de sécurité selon la revendication 1*.*

Dans le cas où la caractéristique particulière est située en surface du document, la caractéristique est une caractéristique de sécurité comme par exemple une caractéristique de fluorescence dans un vernis résistant à la circulation comme un vernis réticulé, de type polyuréthane.

De préférence, ladite caractéristique est intégrée à la structure du document.

Le circuit de mesure comporte un ou plusieurs capteurs miniaturisés pour déterminer la caractéristique à mesurer, et éventuellement d'autres éléments nécessaires à cette mesure. Le capteur peut être dans le circuit intégré de la puce et les autres éléments du circuit de mesure relié par ailleurs à la puce.

Selon un mode de l'invention, le circuit de mesure fait partie du microcircuit intégré.

Selon un autre mode de l'invention, le circuit de mesure peut être relié au dispositif à microcircuit formant la puce par des plots sur la puce.
En effet sur la face active du circuit intégré, il y a des plots et ces plots sont traditionnellement reliées à une interface de communication à antenne ou à plages de contact, pour permettre l'alimentation en énergie de la puce. On ajoute alors des plots supplémentaires ; ces plots peuvent ainsi être utilisés pour alimenter des microcircuits de mesure. Ces circuits de mesure vont ensuite mesurer la caractéristique particulière du document comme les propriétés des sécurités présentes dans le document de sécurité ou même des caractéristiques internes au document comme des caractéristiques physiques ou mécaniques du substrat lui-même utilisé lors de la fabrication dudit document de sécurité. Les résultats de ces mesures seront ensuite comparés avec les données correspondant aux propriétés préalablement mesurées et préalablement enregistrées dans la puce ou directement renvoyées au lecteur qui les comparera avec celles attendues préenregistéres dans le lecteur ou préenregistrées dans une base de données accessible par le lecteur.

Par ce biais, avant tout échange de données informatives entre le document de sécurité contenant un dispositif à microcircuit intégré et un lecteur, il peut y avoir différentes possibilités d'authentification:
- une authentification mutuelle entre le lecteur et la puce par exemple, et/ou
- une authentification par le lecteur et/ou par le dispositif à microcircuit intégré, du document de sécurité lui-même par le biais du contrôle via le microcircuit de mesure, d'au moins une caractéristique particulière.

Selon un cas particulier de l'invention, l'authentification mutuelle est cryptographique.

Ce nouveau processus d'authentification protège contre deux fraudes possibles :
- la falsification des données de la puce,
- la contrefaçon du document de sécurité et aussi de celle de la puce.

On peut aussi, pour augmenter la sécurité, vérifier, en cascade ou non, plusieurs caractéristiques particulières au document de sécurité.

Plus particulièrement, le document de sécurité est tel que ladite caractéristique particulière et le microcircuit de mesure sont choisis parmi les associations caractéristique-capteur suivantes :
- caractéristique magnétique et capteur à effet Hall,
- caractéristique magnétique et capteur à tête magnétorésistive,
- caractéristique magnétique et capteur à résonance magnétique nucléaire,
- caractéristique électrique et un voltmètre,
- caractéristique électrique et un ampèremètre,
- caractéristique électrique et un ohmètre,
- caractéristique d'absorption d'onde dans le domaine du visible et/ou de l'ultra-violet et/ou dans l'infrarouge et capteur de type photodiode,
- caractéristique d'absorption d'onde dans le domaine du visible et/ou de l'ultra-violet et/ou dans l'infrarouge et capteur de type photomultiplicateur,
- caractéristique thermique et capteur thermique,
- caractéristique biologique liée à de l'ADN et une biopuce à ADN,
- caractéristique chimique et capteur électrochimique.

Selon un cas particulier, le microcircuit de mesure comporte une diode à infrarouge.

La caractéristique peut intrinsèquement provenir du document notamment si le document est à base d'un papier filigrané. Le document de sécurité peut être alors tel qu'il comporte un filigrane et que le microcircuit de mesure comporte au moins deux capteurs situés au niveau du filigrane, l'un des capteurs étant situé dans une partie claire et l'autre capteur dans une partie sombre dudit filigrane.

L'invention comporte aussi un second avantage lorsque le document de sécurité contient des dispositifs à microcircuit intégré fonctionnant à distance. En effet, l'invention permet alors pour des sécurités présentes dans le document de sécurité et uniquement détectables par contact à l'origine, d'être détectées dorénavant à distance par le lecteur externe via l'utilisation du dispositif à puce associé au circuit de mesure adapté.

L'invention concerne aussi un procédé de reconnaissance d'un document de sécurité selon la revendication 10.

Selon un cas particulier, l'authentification est cryptographique.

De préférence, le procédé de reconnaissance est tel que ces deux authentifications sont effectuées avant les échanges de données informatives entre le microcircuit intégré et le lecteur externe l'activant.

Selon un cas particulier, le procédé de reconnaissance est tel qu'une authentification via le microcircuit de mesure est réalisée lors des échanges de données informatives entre le microcircuit intégré et le lecteur externe l'activant. Ceci peut s'avérer utile au préalable d'échange de données hautement confidentielles ou de l'incorporation ou la modification de données dans la puce. Plus particulièrement cette authentification en cours d'échanges est une seconde authentification et relative à une autre caractéristique particulière dudit document.

L'invention sera mieux comprise à l'aide des exemples non limitatifs suivants accompagnés de dessins, les échelles ne respectant pas la proportionnalité entre les éléments pour une meilleure clarté.

### Exemple 1 :

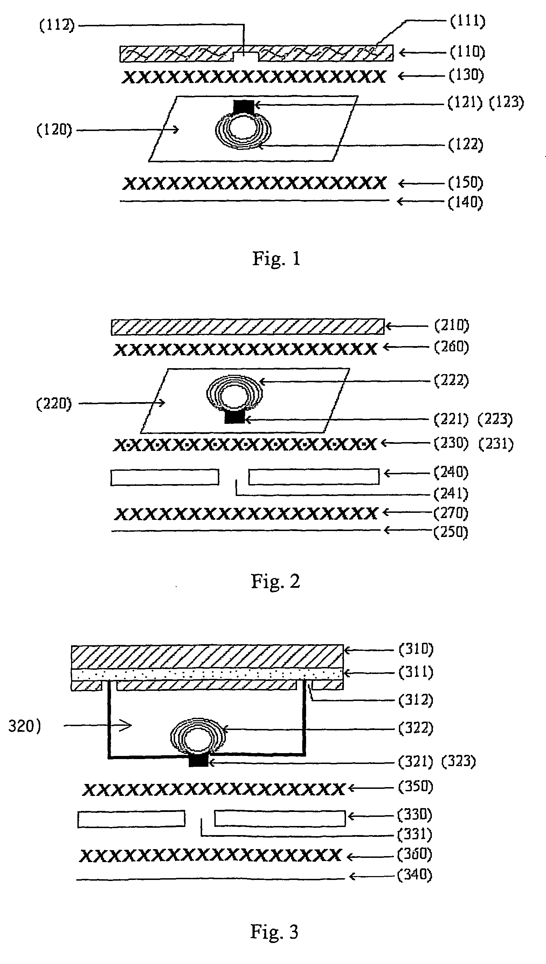

On fabrique une couverture de passeport sécurisé selon le mode de construction suivant et tel que représenté schématiquement sur la figure 1.
On fabrique un papier (110) avec des fibres métalliques (111) avec des propriétés dites à magnétisme doux tel que décrit dans le brevet EP897569.
Le papier (110) présente une cavité (112) gravée avec une profondeur correspondant à l'épaisseur de la puce (121) pour éviter toute surépaisseur du complexe final. Un second jet de papier (140) vient recouvrir le dispositif (120).
Les éléments de la construction sont assemblés par des couches d'adhésif (130) et (150).
Le dispositif à microcircuit intégré est une puce (121) de type sans contact alimentée de façon inductive via une interface à antenne (122), le tout étant disposé sur un film plastique de base pour former l'ensemble (120) dit inlay.
La puce est conçue de telle façon que, par des plots supplémentaires, lui soit relié un microcircuit de mesure fait d'un capteur (123) miniaturisé qui fonctionne selon le principe de celui décrit dans le brevet EP897569. Le capteur est donc alimenté en énergie via la puce. Le capteur se trouve en contact ou à proximité des fibres magnétiques (111) dans le papier (110).
Lors du processus d'authentification à distance, avec ou sans échange de données entre la puce et son lecteur externe (non représenté sur la figure), on a :
- une authentification mutuelle cryptographique entre le lecteur et la puce (la puce vérifie que le lecteur connaît le secret, pose une question aléatoire et compare si la réponse qui est une fonction mathématique entre la question posée et le secret interne, est la même que celle calculée par elle-même, et réciproquement) ;
- une authentification par le dispositif du microcircuit intégré, via le capteur (123) des propriétés magnétiques des fibres métalliques (111) présentes dans le papier (110) et une comparaison du résultat de cette mesure avec celle préalablement enregistrée dans la puce.

On peut envisager que tout échange de données entre le lecteur externe et la puce ne puisse se faire que lorsque la puce, alimentée en énergie via l'antenne, aura remplie avec succès les deux processus d'authentification.

### Exemple 2 :

On fabrique une couverture de passeport sécurisé selon le mode de construction suivant et telle que représentée schématiquement sur la figure 2 :
La construction est faite de trois jets de papier (210), (240) et (250).
Le dispositif à microcircuit intégré est une puce (221) de type sans contact alimentée de façon inductive via une interface à antenne (222), le tout étant disposé sur un film plastique de base pour former l'ensemble (220) dit inlay. Le jet (240) comporte une fenêtre (241) qui évite une surépaisseur dans le document du fait de l'ensemble (220).
Les éléments de la construction sont assemblés par des couches d'adhésif (260), (230) et (270) ; une poudre de pigments magnétiques (231) ayant été introduite dans l'adhésif (230). La poudre magnétique a été magnétisée après l'enduction de l'adhésif (230) sur l'ensemble (220). Les pigments magnétiques sont des pigments de moyenne à haute coercitivité.
La puce est conçue de telle façon que, par des plots supplémentaires, lui soit relié un microcircuit de mesure fait d'un capteur (223) miniaturisé à effet Hall qui soit en contact ou à proximité de l'enduction d'adhésif contenant la poudre magnétique.
Un capteur à effet Hall est un semi-conducteur (qui peut être du silicium), qui, lorsqu'il est parcouru par un courant électrique et soumis à un champ magnétique, présente une tension à ses bornes.
Lors du processus à distance d'authentification sans échange de données entre le lecteur et la puce, on a une authentification du document par le dispositif de microcircuit intégré, via une mesure par le capteur à effet Hall de l'aimantation rémanente émise par les particules magnétiques présentes dans la construction et une comparaison du résultat de cette mesure avec celle préalablement enregistrée dans la puce. Le capteur à effet Hall fonctionnera dans le cadre de l'exemple par couplage inductif et sera parcouru par un courant que lorsque le lecteur excitera la puce et donc induira un courant induit dans l'interface à antenne.
On peut préconiser que l'authentification du document est validée par la concordance des données.
On peut préconiser une autre forme d'authentification et de sécurité de l'authentification en décidant que tout échange de données informatives entre le lecteur et la puce ne peut se faire que lorsque la puce alimentée en énergie via l'antenne, a rempli avec succès les deux processus d'authentification, celui décrit et celui de la reconnaissance mutuelle de la puce et du lecteur.

### Exemple 3 :

On fabrique un document d'identité sécurisé selon le mode de construction décrit ci-après et tel que représenté schématiquement sur la figure 3.
La construction est faite de trois jets de papier (310), (330) et (340).
On a introduit, en masse dans le papier (310), un fil de sécurité métallisé (311) constitué d'un fil en polyester recouvert d'une fine couche d'aluminium présentant des propriétés électriques particulières. Le papier (310) est gravé en creux à chaque extrémité avec un rayon laser, de façon à permettre une connexion du fil de sécurité à la puce via par exemple un adhésif conducteur dans les zones (312).
Le dispositif à microcircuit intégré est une puce (321) de type sans contact alimentée de façon inductive via une interface à antenne (322), le tout étant disposé sur un film plastique de base pour former l'ensemble (320) dit inlay. II est directement présent sur la face intérieure du papier (310).
Le jet (330) comporte une fenêtre (331) qui évite une surépaisseur dans le document du fait de l'ensemble (320).
Les éléments de la construction sont assemblés par des couches d'adhésif (350) et (360).
La puce est conçue de telle façon qu'elle soit connectée par deux de ses plots au fil de sécurité métallisé (311, et par deux autres plots à l'interface à antenne (322).

Lors du processus à distance d'authentification avec ou sans échange de données, entre le lecteur externe et la puce, on a :
- une authentification mutuelle cryptographique entre le lecteur et la puce,
- une authentification par le lecteur du document de sécurité par le biais de la vérification des propriétés électroconductrices du fil de sécurité.

Le dispositif à puce contrôle la tension aux bornes du fil de sécurité parcouru par un courant induit créé par l'interface à antenne de la puce. Parallèlement, le lecteur lit le numéro gravé dans la puce et interroge ensuite une base de données dans laquelle il trouve les données correspondant aux propriétés conductrices attendues pour le fil de sécurité, et pour le numéro de puce donné. Le lecteur communique ensuite cette valeur à la puce qui la compare avec celle mesurée en directe sur le document de sécurité.
Si les deux processus d'authentification sont satisfaisants, la carte est dite authentique.

### Exemple 4 :

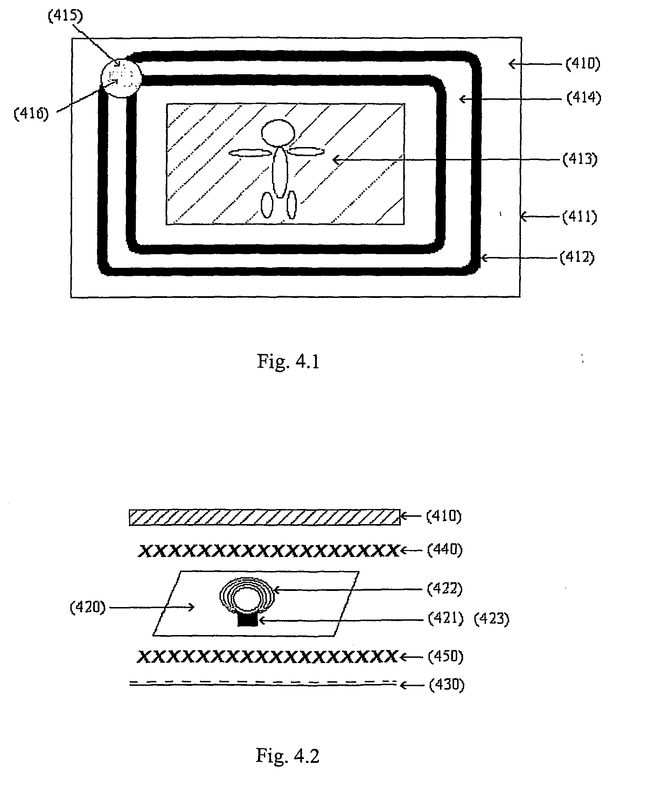

On fabrique une étiquette de sécurité selon le mode de construction suivant et tel que représenté schématiquement sur les figures 4.1 (vue de dessus) et 4.2 (vue selon la coupe dans le sens Z).
Cette étiquette dispose d'un frontal (410) en plastique comportant un film plastique en PET (411) avec un hologramme (413) réalisé de façon bien connue par embossage et métallisation et une zone avec de l'encre électroluminescente (415). L'hologramme a été démétallisé par endroit de façon à créer un dessin d'antenne (412). On applique ensuite de l'encre isolante (416) de façon à créer un pont ultérieur entre les deux extrémités de l'antenne (412) et l'encre électroluminescente (415).
Par ailleurs l'étiquette comprend un dispositif de microcircuit intégré qui est une puce (421) de type sans contact alimenté de façon inductive via une interface à antenne (422), il est en sandwich entre le support holographique (410) et un support (430) en kraft siliconé à l'aide des couches d'adhésif (440) et (450).
Lors de la lecture de la puce, le champ électromagnétique induit fournit par le lecteur externe va à la fois alimenter l'antenne (422) de la puce (421) du microcircuit intégré et l'antenne (412) reliée à l'encre électroluminescente (415). Cette encre sera donc parcourue par un courant électrique provenant de l'antenne qui va la faire changer de couleur, ce phénomène étant parallèlement détecté par un microcapteur de tension (423) aux bornes de la zone électroluminescente.
Lors du processus à distance d'authentification avec ou sans échange de données entre le lecteur externe et la puce, on a :
- une authentification mutuelle, éventuellement cryptographique, entre le lecteur et la puce,
- une authentification du document par détection d'une tension aux bornes de la zone électroluminescente de l'authenticité.

De plus on a une authentification visuelle du document du fait de la luminescence de l'encre.

### Exemple 5 :

On fabrique un papier de sécurité formé de trois jets, le jet central comportant un filigrane ombré et l'un des jets de surface comportant un microcircuit intégré formant une puce et une antenne ainsi qu'un circuit de mesure, connecté à la puce, qui comporte une diode à infrarouge et un capteur mesurant l'absorption d'une onde IR, la diode et le capteur étant placés tels qu'un rayon IR passe dans une zone claire du filigrane et qu'un autre rayon IR passe dans une zone sombre du filigrane et que le capteur mesure la différence d'absorptions d'onde IR relatives à ces parties de filigrane.
Cette mesure constitue la caractéristique particulière du document qui établira le contrôle de la puce et/ou du document.

### Exemple 6 :

On fabrique un papier de sécurité formé d'un jet comportant une zone de type filigrane, c'est-à-dire d'épaisseur variable, recouvert au moins en partie par une zone métallisée, provenant d'un foil ou hologramme, de manière à former un condensateur. Le filigrane étant formé de zones d'épaisseur variables, on obtiendra des capacités différentes selon ces zones. Le foil ou hologramme comporte sur sa face interne un microcircuit intégré formant une puce et une antenne ainsi qu'un circuit de mesure avec deux capteurs de mesure de capacité, connecté à la puce, l'un des capteurs étant placé dans une zone d'épaisseur réduite (zone claire) du filigrane et l'autre capteur dans une zone plus épaisse (zone sombre) du filigrane et que le capteur mesure la différence d'absorptions d'onde IR relatives à ces parties de filigrane.
Cette mesure constitue la caractéristique particulière du document qui établira le contrôle de la puce et/ou du document.

### Exemple 6 :

On fabrique un papier de sécurité avec un marqueur biologique tel que de l'ADN, il peut s'agir en particulier d'une fibre à laquelle est liée de l'ADN.
Le papier comporte aussi un dispositif à microcircuit intégré avec une antenne et un capteur électronique intégré à ADN qui est une biopuce à ADN constituant la la cible pour identifier la séquence de l'ADN de la fibre selon le mécanisme d'hybridation, la biopuce comportant un capteur qui caractérise cette hybridation. Le capteur peut être du type GENFET qui fonctionne sur des interprétations de courbes d'impédance, tel que celui développé par l'Ecole Centrale de Lyon et l'Université Concordia de Montréal.
La séquence spécifique de l'ADN de la fibre a été préalablement enregistrée dans la puce. Cette séquence constitue la caractéristique particulière du substrat du document qui établira le contrôle de la puce et/ou du document.

## Revendications

1. Document de sécurité comportant au moins une caractéristique particulière de sécurité et/ou interne au document, le document comportant au moins un microcircuit intégré sans contact, dit puce (121, 221, 321, 421), avec une interface de communication à antenne (122, 222, 322, 422), la mesure de ladite caractéristique étant présente dans la mémoire de la puce (121, 221, 321, 421), le document étant **caractérisé par le fait que** le microcircuit intégré est lié à au moins un microcircuit de mesure de ladite caractéristique (123, 223, 423) et que ledit microcircuit de mesure (123, 223, 423) est intégré au document.

2. Document de sécurité selon la revendication précédente, **caractérisé par le fait que** ladite caractéristique est intégrée à la structure dudit document.

3. Document de sécurité selon l'une des revendications précédentes, **caractérisé par le fait que** plusieurs caractéristiques particulières au document de sécurité sont mesurées, en cascade ou non.

4. Document de sécurité selon l'une des revendications précédentes, **caractérisé par le fait que** le microcircuit de mesure comporte un ou plusieurs capteurs (123, 223, 423).

5. Document de sécurité selon l'une des revendications précédentes, **caractérisé par le fait que** le microcircuit de mesure (123, 223, 423) est relié par des moyens de connexion disposés sur le dispositif à microcircuit intégré (121,221,321,421).

6. Document de sécurité selon l'une des revendications 1 à 4, **caractérisé par le fait que** le microcircuit de mesure fait partie du dispositif à microcircuit intégré (121, 221, 321, 421).

7. Document de sécurité selon l'une des revendications 4 à 6, **caractérisé par le fait que** ladite caractéristique particulière et le microcircuit de mesure (123, 223, 423) sont choisis parmi les associations caractéristique-capteur suivantes :
- caractéristique magnétique et capteur à effet Hall,
- caractéristique magnétique et capteur à tête magnétorésistive,
- caractéristique magnétique et capteur à résonance magnétique nucléaire,
- caractéristique électrique et un voltmètre,
- caractéristique électrique et un ampèremètre,
- caractéristique électrique et un ohmètre,
- caractéristique d'absorption d'onde dans le domaine du visible et/ou de l'ultra-violet et/ou dans l'infrarouge et capteur de type photodiode,
- caractéristique d'absorption d'onde dans le domaine du visible et/ou de l'ultra-violet et/ou dans l'infrarouge et capteur de type photomultiplicateur,
- caractéristique thermique et capteur thermique,
- caractéristique biologique liée à de l'ADN et une biopuce à ADN,
- caractéristique chimique et capteur électrochimique.

8. Document de sécurité selon l'une des revendications précédentes, **caractérisé par le fait que** le microcircuit de mesure comporte une diode à infrarouge.

9. Document de sécurité selon l'une des revendications précédentes, **caractérisé par le fait qu'**il comporte un filigrane et que le microcircuit de mesure comporte au moins deux capteurs situés au niveau du filigrane, l'un des capteurs étant situé dans une partie claire et l'autre capteur dans une partie sombre dudit filigrane.

10. Procédé de reconnaissance d'un document de sécurité tel que décrit dans l'une des revendications précédentes, comportant :
- une authentification mutuelle entre le microcircuit intégré (121, 221, 321, 421 ) et un lecteur externe l'activant, et/ou
- une authentification dudit document par le dispositif de microcircuit intégré, une fois activé par un lecteur externe, qui, via le microcircuit de mesure (123, 223, 423) qui détermine au sein dudit document ladite caractéristique particulière, le microcircuit de mesure étant lui-même activé par le microcircuit intégré, compare le résultat de cette détermination avec celle présente dans la mémoire dudit microcircuit intégré.

11. Procédé de reconnaissance selon la revendication 10, **caractérisé par le fait que** ces deux authentifications sont effectuées avant les échanges de données informatives entre le microcircuit intégré et le lecteur externe l'activant.

12. Procédé de reconnaissance selon la revendication 10, **caractérisé par le fait qu'**une authentification via le microcircuit de mesure est réalisée lors des échanges de données informatives entre le microcircuit intégré et le lecteur externe l'activant.

13. Procédé de reconnaissance selon les revendications 11 et 12, **caractérisé par le fait que** cette authentification en cours d'échanges informative est une seconde authentification et relative à une autre caractéristique particulière de sécurité et/ou interne au dit document.

## Claims

1. Security document including at least one particular security characteristic and/or characteristic internal to the document, the document including at least one contactless integrated microcircuit, or microchip (121, 221, 321, 421), with a communication interface including an antenna (122, 222, 322, 422), the measurement of said characteristic being present in the memory of the microchip (121, 221, 321, 421), the document being **characterized in that** the integrated microcircuit is connected to at least one microcircuit for measuring said characteristic (123, 223, 423) and said measuring microcircuit (123, 223, 423) is integrated into the document.

2. Security document according to the preceding claim, **characterized in that** said characteristic is integrated into the structure of said document.

3. Security document according to either of the preceding claims, **characterized in that** a plurality of characteristics particular to the security document are measured, in cascade or otherwise.

4. Security document according to any one of the preceding claims, **characterized in that** the measuring microcircuit includes one or more sensors (123, 223, 423).

5. Security document according to any one of the preceding claims, **characterized in that** the measuring microcircuit (123, 223, 423) is connected by connection means disposed on the integrated microcircuit device (121, 221, 321, 421).

6. Security document according to any one of Claims 1 to 4, **characterized in that** the measuring microcircuit is part of the integrated microcircuit device (121, 221, 321, 421).

7. Security document according to any one of Claims 4 to 6, **characterized in that** said particular characteristic and the measuring microcircuit (123, 223, 423) are chosen from the following characteristic-sensor combinations:
- magnetic characteristic and Hall effect sensor,
- magnetic characteristic and magnetoresistive head sensor,
- magnetic characteristic and nuclear magnetic resonance sensor,
- electrical characteristic and a voltmeter,
- electrical characteristic and an ammeter,
- electrical characteristic and an ohmmeter,
- wave absorption characteristic in the visible and/or ultraviolet and/or infrared range and photodiode-type sensor,
- wave absorption characteristic in the visible and/or ultraviolet and/or infrared range and photomultiplier-type sensor,
- thermal characteristic and heat sensor,
- biological characteristic linked to DNA and a DNA biochip,
- chemical characteristic and electrochemical sensor.

8. Security document according to any one of the preceding claims, **characterized in that** the measuring microcircuit includes an infrared diode.

9. Security document according to any one of the preceding claims, **characterized in that** it includes a watermark and the measuring microcircuit includes at least two sensors located at the level of the watermark, one of the sensors being situated in a clear portion and the other sensor in a dark portion of said watermark.

10. Method of recognizing a security document according to any one of the preceding claims, including:
- mutual authentication of the integrated microcircuit (121, 221, 321, 421) and an external reader activating it, and/or
- authentication of said document by the integrated microcircuit device, once activated by an external reader, which, via the measuring microcircuit (123, 223, 423) that determines said particular characteristic in said document, the measuring microcircuit being itself activated by the integrated microcircuit, compares the result of this determination with that present in the memory of said integrated microcircuit.

11. Recognition method according to Claim 10, **characterized in that** these two authentications are effected before exchanges of information data between the integrated microcircuit and the external reader activating it.

12. Recognition method according to Claim 10,
**characterized in that** authentication via the measuring microcircuit is effected during exchanges of information data between the integrated microcircuit and the external reader activating it.

13. Recognition method according to Claims 11 and 12, **characterized in that** this authentication during information exchanges is a second authentication and relates to another particular security characteristic and/or characteristic internal to said document.

## Patentansprüche

1. Sicherheitsdokument mit mindestens einem besonderen Sicherheitsmerkmal und/oder dokumentinternen Merkmal, wobei das Dokument mindestens eine berührungslose integrierte Mikroschaltung, genannt Chip (121, 221, 321, 421) mit einer Kommunikationsschnittstelle mit Antenne (122, 222, 322, 422) umfasst, wobei die Messung dieses Merkmals im Speicher dieses Chips (121, 221, 321, 421) lokalisiert ist, wobei das Dokument **dadurch gekennzeichnet ist, dass** die integrierte Mikroschaltung mit mindestens einem Chip zur Messung des benannten Merkmals (123, 223, 423) verbunden ist und dieser Mess-Chip (123, 223, 423) in das Dokument integriert ist.

2. Sicherheitsdokument nach dem vorangegangenen Anspruch, **dadurch gekennzeichnet, dass** das benannte Merkmal In die Struktur des Dokuments integriert ist.

3. Sicherheitsdokument nach einem der vorangegangenen Ansprüche, **dadurch gekennzeichnet, dass** mehrere besondere Merkmale des Sicherheitsdokuments kaskadenweise oder nicht kaskadenweise gemessen werden.

4. Sicherheitsdokument nach einem der vorangegangenen Ansprüche, **dadurch gekennzeichnet, dass** der Mess-Chip einen oder mehrere Sensoren umfasst (123, 223, 423).

5. Sicherheitsdokument nach einem der vorangegangenen Ansprüche, **dadurch gekennzeichnet, dass** der Mess-Chip (123, 223, 423) durch Verbindungsmittel verbunden ist, die auf der Vorrichtung der integrierten Mikroschaltung (121, 221, 321,421) angeordnet sind.

6. Sicherheitsdokument nach einem der Ansprüche 1 bis 4, **dadurch gekennzeichnet, dass** der Mess-Chip zur Vorrichtung der integrierten Mikroschaltung (121, 221, 321,421) gehört.

7. Sicherheitsdokument nach einem der Ansprüche 1 bis 6, **dadurch gekennzeichnet, dass** das benannte besondere Merkmal und der Mess-Chip (123, 223, 423) unter den folgenden Merkmal-Sensor-Paarungen gewählt sind:
- magnetisches Merkmal und Halleffektsensor
- magnetisches Merkmal und Feldplattensensor
- magnetisches Merkmal und magnetischer Kernresonanzsensor
- elektrisches Merkmal und Voltmeter
- elektrisches Merkmal und Amperemeter
- elektrisches Merkmal und Ohmmeter
- Wellenabsorptionsmerkmal im Bereich der sichtbaren Wellen und/oder im Bereich Ultraviolett und/oder im Bereich Infrarot, und Sensor vom Typ Fotodiode
- Wellenabsorptionsmarkmal im Bereich der sichtbaren Wellen und/oder im Bereich Ultraviolett und/oder im Bereich infrarot, und Sensor vom Typ Fotovervielfacher
- thermisches Merkmal und Wärmesensor
- DNA-gebundenes biologisches Merkmal und DNA-Biochip
- chemisches Merkmal und elektrochemischer Sensor

8. Sicherheitsdokument nach einem der vorangegangenen Ansprüche, **dadurch** gekenntzeichnet, dass der Mess-Chip eine Infrarotdiode umfasst.

9. Sicherheitsdokument nach einem der vorangegangenen Ansprüche, **dadurch gekennzeichnet, dass** es ein Wasserzeichen umfasst und dass der Mess-Chip mindestens zwei Sensoren im Bereich des Wasserzeichens umfasst, wobei einer der Sensoren in einem hellen Bereich und der andere Sensor in einem dunklen Bereich des Wasserzeichens liegt.

10. Verfahren zur Erkennung eines Sicherheitsdokuments gemäß einem der vorangegangenen Ansprüche, umfassend:
- eine gegenseitige Authentifizierung zwischen der integrierten Mikroschaltung (212, 221, 321, 421) und einem externen Lesegerät, das sie aktiviert, und/oder
- eine Authentifizierung des Dokuments durch die Vorrichtung der integrierten Mirkoschaltung, die - nach Aktivierung durch das externe Lesergerät - mittels des Mess-Chips (123, 223, 423), der das besondere Merkmal im Dokument bestimmt, das Ergebnis dieser Bestimmung mit dem Wert im Speicher der integrierten Mikroschaltung vergleicht, wobei der Mess-Chip selbst durch die integrierte Mikroschaltung aktiviert wird.

11. Verfahren zur Erkennung nach Anspruch 10, **dadurch gekennzeichnet, dass** diese zwei Authentifizierungen vor dem Austausch von informationsdaten zwischen der integrierten Mikroschaltung und dem externen Lesegerät, das sie aktiviert, erfolgt.

12. Verfahren zur Erkennung nach Anspruch 10, **dadurch gekennzeichnet, dass** eine Authentifizierungen mittels des Mess-Chips während des Austauschs von Informationsdaten zwischen der integrierten Mikroschaltung und dem externen Lesegerät, das sie aktiviert, erfolgt.

13. Verfahren zur Erkennung nach Anspruch 11 und 12, **dadurch gekennzeichnet, dass** diese Authentifizierung während des Informationsaustauschs eine zweite Authentifizierung ist und sich auf ein anderes besonderes Sicherheitsmerkmal und/oder dokumentinternes Merkmal bezieht.
